# EUROPEAN PATENT SPECIFICATION

(11) **EP 3 210 010 B1**
(45) Date of publication and mention of the grant of the patent: **24.04.2019**
(21) Application number: 15852188.0
(22) Date of filing: 21.10.2015
(51) Int. Cl.: G01N 27/403, B01L 3/00

(54) **DIGITAL MICROFLUIDIC DEVICES WITH INTEGRATED ELECTROCHEMICAL SENSORS**
DIGITALE MIKROFLUIDISCHE VORRICHTUNGEN MIT INTEGRIERTEN ELEKTROCHEMISCHEN SENSOREN
DISPOSITIFS MICROFLUIDIQUES NUMÉRIQUES AVEC CAPTEURS ÉLECTROCHIMIQUES INTÉGRÉS

(30) Priority: 21.10.2014 US 201462066818 P
(43) Date of publication of application: 30.08.2017
(73) Proprietor: The Governing Council of the University of Toronto, Toronto, ON M5G 1L5 (CA)
(72) Inventor: WHEELER, Aaron R., Toronto, Ontario M6H 3M4 (CA); YU, Yue, Toronto, Ontario M1T 2R1 (CA); SHAMSI, Mohtashim, Carterville, IL 62918 (US)
(74) Representative: J A Kemp
(86) International application number: PCT/CA2015/051066
(87) International publication number: WO 2016/061684

(56) References cited:
- WO-A1-2005/047696
- WO-A2-2006/000828
- WO-A2-2010/091334
- CN-A- 103 170 383
- CN-A- 103 170 383
- US-A1- 2009 017 197
- US-A1- 2013 143 312
- ABHILASH PANERI ET AL: "Effect of change in ratio of electrode to total pitch length in EWOD based microfluidic system", COMPUTER APPLICATIONS AND INDUSTRIAL ELECTRONICS (ICCAIE), 2010 INTERNATIONAL CONFERENCE ON, IEEE, 5 December 2010 (2010-12-05), pages 25-28, XP031983206, DOI: 10.1109/ICCAIE.2010.5735040 ISBN: 978-1-4244-9054-7
- YIFAN LI ET AL: "Test Structure for Characterizing Low Voltage Coplanar EWOD System", IEEE TRANSACTIONS ON SEMICONDUCTOR MANUFACTURING, IEEE SERVICE CENTER, PISCATAWAY, NJ, US, vol. 22, no. 1, 4 February 2009 (2009-02-04), pages 88-95, XP011243345, ISSN: 0894-6507, DOI: 10.1109/TSM.2008.2010737

## Description

### BACKGROUND

This present disclosure relates to digital microfluidic devices, and to electrochemical detection on via digital microfluidic devices.

Digital microfluidics is an emerging technology in which discrete liquid droplets are manipulated on the surface of an array of electrodes. Digital microfluidics has numerous complementary differences relative to conventional enclosed-microchannel-based fluidics, including reconfigurability (a generic device format can be used for any application) and control over all reagents. Digital microfluidics is typically implemented in a "two-plate" format, in which droplets are sandwiched between a bottom plate (bearing an array of electrodes coated with an insulator), and a top plate (bearing a ground electrode not coated with an insulator).

CN 103 170 383 A comes from the technical field of micro-fluidic analysis chips, and concretely relates to a nano-material electrode modification based electrochemical integrated digital micro-fluidic chip. The electrochemical integrated digital micro-fluidic chip treats a digital micro-fluidic chip as a base and integrates an electrochemical-sensing micro-electrode, an electrochemical electrode is embedded in the control electrode of the digital micro-fluidic chip, and all the electrodes are positioned in a same plane of the chip. The nano-material modification of the electrochemical sensing electrode is realized through the micro-fluidic automatic control in order to enhance the electrochemical sensing capability of the micro-fluidic chip. The nano-material electrode modification based electrochemical integrated digital micro-fluidic chip has the advantages of novel design, high integration level, convenient making, high automation degree, strong detection capability, realization of the micro-scale, rapid and sensitive detection, and substantial widening of the application ranges of the electrochemical sensing and digital micro-fluidic fields.

WO 2006/000828 A2 discloses a device comprising an electrochemical cell, said device comprising a strip having at least one receptacle or partial receptacle formed therein, the receptacle or partial receptacle having a first open part in a first surface of the strip to enable a sample to enter the receptacle or partial receptacle, wherein a working electrode of the electrochemical cell is in a wall or walls of the receptacle or partial receptacle, and wherein a pseudo reference electrode of the electrochemical cell comprises a pseudo reference electrode layer formed on at least a part of the first surface of the strip.

US 2009/017197 A1 discloses an iridium oxide (IrOx) nanowire protein sensor and associated fabrication method. The method provides a substrate and forms overlying working and counter electrodes. A dielectric layer is deposited over the working and counter electrodes and contact holes are formed in the dielectric layer, exposing regions of the working and counter electrodes. IrOx nanowires (where 0<=X<=2) are grown from exposed regions of the working electrode. In one aspect, the IrOx nanowires are additionally grown on the dielectric, and subsequently etched from the dielectric. In another aspect, IrOx nanowires are grown from exposed regions of the counter electrode.

### SUMMARY

According to the present invention there is provided the digital microfluidic device of claim 1. Additional aspects of the invention are set out in the dependent claims.

A further understanding of the functional and advantageous aspects of the disclosure can be realized by reference to the following detailed description and drawings.

### BRIEF DESCRIPTION OF THE DRAWINGS

Embodiments will now be described, by way of example only, with reference to the drawings, in which:
**FIG. 1A** shows a cross-sectional view of a two-plate digital microfluidic device.
**FIG. 1B** shows a cross-sectional view of a one-plate digital microfluidic device.
**FIG. 2A** shows an underside view of the top plate of a digital microfluidic device that includes a two-electrode electrochemical sensor.
**FIG. 2B** is a cross-section of a two-plate digital microfluidic device that includes a two-electrode electrochemical sensor within the top plate of the device, where the section is taken along line A-A in FIG. 2A.
**FIGS. 3A and 3B** show examples of conventional two-electrode electrochemical sensors.
**FIGS. 4A-4C** show various example two-electrode electrochemical sensor configurations in which the working electrode is provided as a single elongate segment that is spatially distributed within a spatial region associated with the counter electrode.
**FIGS. 5A-5E** show various example two-electrode electrochemical sensor configurations in which the working electrode is provided in the form of a first elongate electrode segment that branches into two or more additional elongate electrode segments that are spatially distributed within a spatial region associated with the counter electrode.
**FIGS. 6A-6D** show various example two-electrode electrochemical sensor configurations in which elongate segments of the working electrode are interdigitated with neighbouring elongate segments of the counter electrode.
**FIGS. 7A** and **7B** shows example two-electrode electrochemical sensor configurations in which the working electrode is provided in the form of an elongate segment that surrounds at least a portion of a perimeter of said electrochemical counter electrode, and also extends within a spatial region associated with the counter electrode.
**FIG. 8** shows an example two-electrode electrochemical sensor configuration in which the working electrode is provided in the form of an elongate segment that surrounds at least a portion of a perimeter of said electrochemical counter electrode.
**FIGS. 9A-9C** show images of three different two-electrode electrochemical sensors formed in the top plate of a digital microfluidic device by removal, through etching, of selected regions of an ITO layer.
**FIG. 10** shows an example system for performing electrochemical sensing with a digital microfluidic device.
**FIGS. 11A-C** show various alternative example embodiments of digital microfluidic devices incorporating electrodes for forming an electrochemical cell, including (A) a single-plate example embodiment, (B) a two-plate example embodiment in which the electrochemical cell electrodes are formed in the bottom plate, and (C) a two-plate example embodiment in which the electrochemical cell electrodes are formed in the top plate, and where one or more secondary digital microfluidic electrodes are provided in the bottom plate.
**FIG. 12A** plots a comparison of peak current strength compared to total surface area of the working electrode. It is noted that peak signal current increases approximately linearly with electrode surface area.
**FIG. 12B** shows representative cyclic voltammograms (CV) of 2mM ferri-ferrocyanide in PBS buffer for sensors with line, cross and star shaped working electrodes.

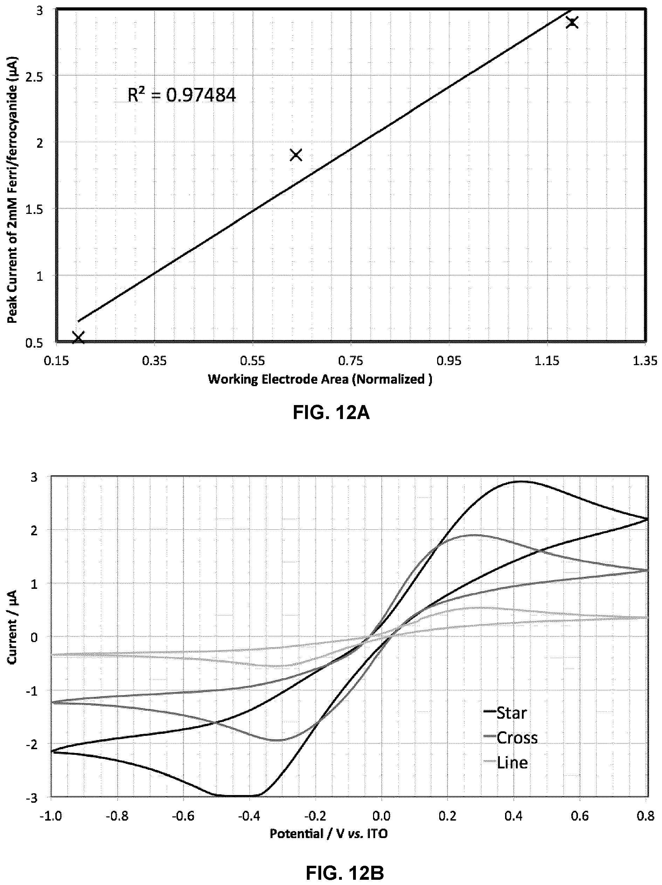

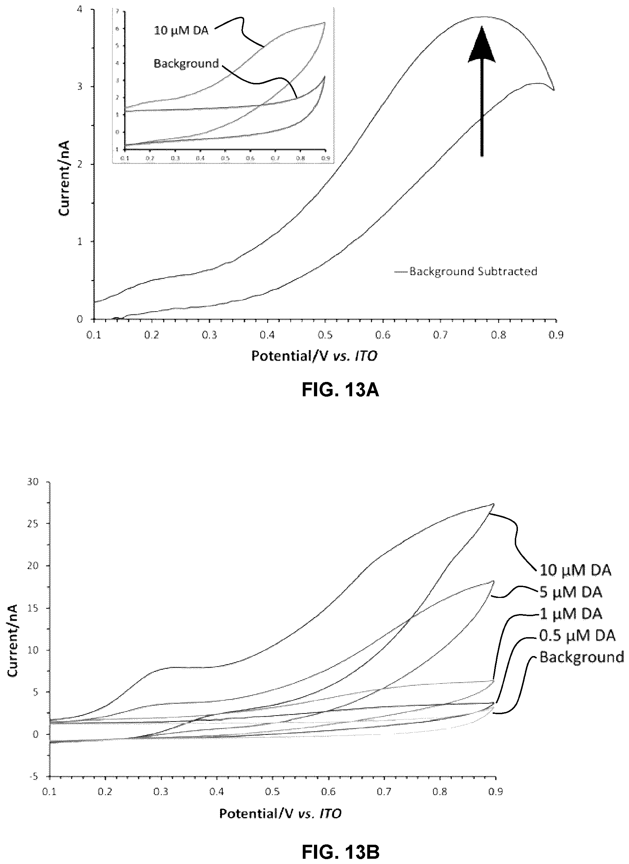

**FIGS. 13A-C** show results from on-chip analysis of dopamine using the two-electrode electrochemical cells. FIG. 12A shows background subtracted cyclic voltammograms of dopamine (DA) at 10 µM. The black arrow signifies the potential chosen for comparing peak potentials (0.788V). The inset shows the raw signal and background. FIG. 12B shows a series of non-background-subtracted cyclic voltammograms of 0, 0.5, 1, 5, and 10 µM DA. FIG. 12C shows a calibration curve (black) of dopamine from 0 nM to 10 µM. Error bars represent ± one standard deviation and are smaller than the markers. The limit of detection is 40 nM, defined as the concentration corresponding to three times the standard deviation of blank measurements.

### DETAILED DESCRIPTION

Various embodiments and aspects of the disclosure will be described with reference to details discussed below. The following description and drawings are illustrative of the disclosure and are not to be construed as limiting the disclosure. Numerous specific details are described to provide a thorough understanding of various embodiments of the present disclosure. However, in certain instances, well-known or conventional details are not described in order to provide a concise discussion of embodiments of the present disclosure.

As used herein, the terms "comprises" and "comprising" are to be construed as being inclusive and open ended, and not exclusive. Specifically, when used in the specification and claims, the terms "comprises" and "comprising" and variations thereof mean the specified features, steps or components are included. These terms are not to be interpreted to exclude the presence of other features, steps or components.

As used herein, the term "exemplary" means "serving as an example, instance, or illustration," and should not be construed as preferred or advantageous over other configurations disclosed herein.

As used herein, the terms "about" and "approximately" are meant to cover variations that may exist in the upper and lower limits of the ranges of values, such as variations in properties, parameters, and dimensions. Unless otherwise specified, the terms "about" and "approximately" mean plus or minus 25 percent or less.

It is to be understood that unless otherwise specified, any specified range or group is as a shorthand way of referring to each and every member of a range or group individually, as well as each and every possible sub-range or sub -group encompassed therein and similarly with respect to any sub-ranges or sub-groups therein. Unless otherwise specified, the present disclosure relates to and explicitly incorporates each and every specific member and combination of sub-ranges or sub-groups.

As used herein, the term "on the order of", when used in conjunction with a quantity or parameter, refers to a range spanning approximately one tenth to ten times the stated quantity or parameter.

Unless defined otherwise, all technical and scientific terms used herein are intended to have the same meaning as commonly understood to one of ordinary skill in the art.

As used herein, the term "two-electrode electrochemical sensor" refers to an electrochemical sensor including a working electrode and a second electrode, where the second electrode is referred to herein as a "counter electrode" or a "pseudo reference" electrode.

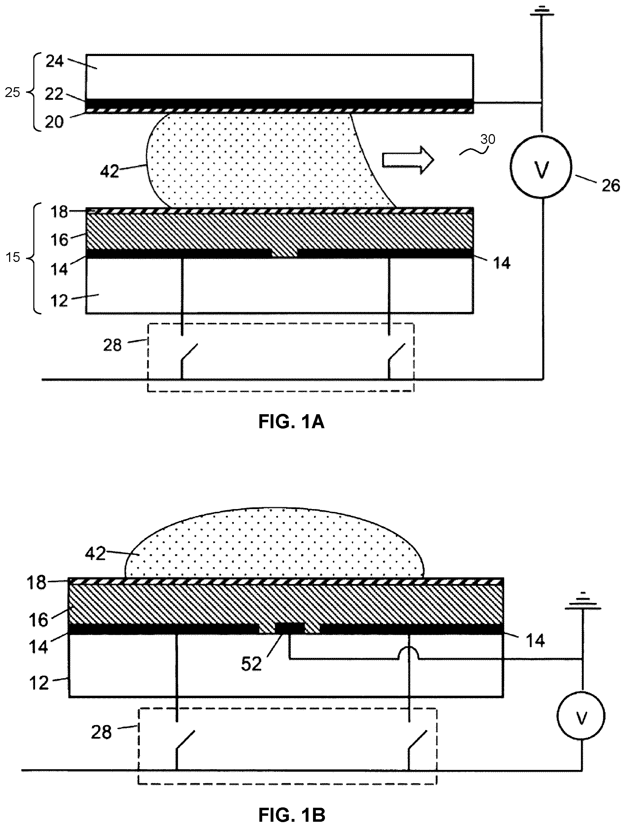

Digital microfluidics (DMF) is an emerging technology in which discrete liquid droplets are manipulated on the surface of an array of electrodes. The technology has numerous complementary advantages relative to conventional enclosed-microchannel-based fluidics, including reconfigurability (a generic device format can be used for any application) and capability to integrate a wide range of sample processing operations. Digital microfluidics is typically implemented in a "two-plate" format, in which droplets are sandwiched between a bottom plate (bearing an array of electrodes coated with an insulator), and a top plate (bearing a counter-electrode not coated with an insulator). Droplets are made to move by applying potentials between bottom plate and top-plate electrodes. The top plate electrodes are often formed from transparent indium tin oxide (ITO) to enable visualization of droplet movement. A conventional two-plate digital microfluidic device is illustrated in FIGS. 1A and 1 .

FIG. 1A is a cross-sectional view of a portion of a conventional digital microfluidic device, showing a two-plate format. The device includes a first plate 15 and a second plate 25, separated by a gap 30. First plate 25 is formed from an electrically insulating substrate 12, on which an array of digital microfluidic actuation electrodes 14 (e.g. 10 nm Cr+, 100 nm Au) are provided. A dielectric layer 16 is formed over actuation electrodes 14 (for example, 2 µm Parylene-CTM). First plate 16 can have more than one dielectric layer. Dielectric layer 16 is coated with hydrophobic layer 18 (for example, Teflon AFTM, 50 nm), in order to permit droplet motion under electrical actuation of actuation electrodes 14. The hydrophobic surface is often referred to as a working surface.

Spaced above actuation electrodes 14 and dielectric layer 16, on the other side of gap 30, is a second plate, where the spacing may be achieved using a spacer (not shown). Continuous secondary electrode 22 (or a plurality of secondary electrodes) is provided on an insulating substrate 24 (secondary electrode 22 is often referred to in the digital microfluidic literature as a reference electrode, but the term "secondary" is employed herein in order to avoid confusion with the reference electrode of an electrochemical sensor), and a hydrophobic layer 20 (for example Teflon AFTM, 50 nm) is coated on secondary electrode 22. Alternatively, another dielectric layer can be deposited between layers 20, 22.

Liquid droplets 42 are provided within gap 30 between two hydrophobic layers 18 and 20. Electrodes 14, voltage source 26, and the continuous secondary electrode 22 together form an electric field, digitally manipulated by controller 28. For droplet manipulation, secondary electrode 22 is biased to a potential different from the actuating potential. A commonly used reference potential for secondary electrode 22 is ground. The upper hydrophobic layer 20, secondary electrode 22, and substrate layer 24 may be substantially transparent to allow optical detection, such as optical imaging or optical analysis of digital microfluidic assays.

While some aspects of the present disclosure involve adaptations of the two-plate design of FIG. 1A, one-plate design adaptations are also envisioned. In FIG. 1B shows a one-plate design in which layers 20, 22, and 24 are removed. Rather than have a dedicated secondary electrode layer 22, the secondary electrode is patterned adjacent to electrodes 14, forming a continuous grid 52 separated from electrodes 14 by dielectric material 16. The continuous grid 52 extends in both directions defining the plane in which actuation electrodes 14 are located. The design of secondary electrodes 52 is not limited to a grid, e.g. they can be in a form of a wire or an array similarly to electrodes 14.

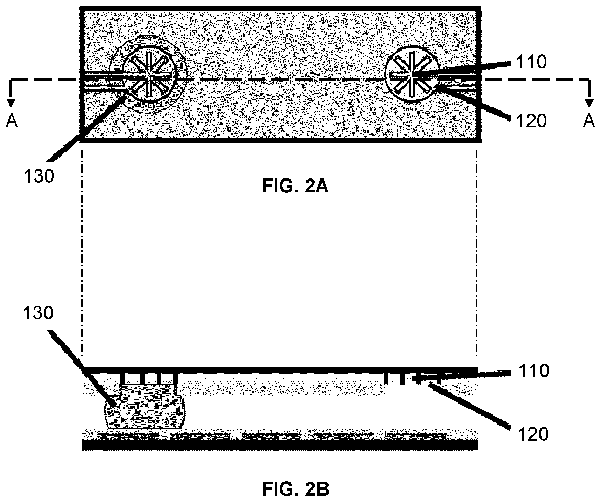

Referring now to FIGS. 2A and 2B, an illustration is provided of example embodiment of a digital microfluidic device that incorporates two two-electrode electrochemical sensors in the top-plate of the digital microfluidic device, showing a droplet 130 located below the left-most sensor. It is noted that the terms "top", "bottom", "upper" and "lower" are used for heuristic purposes and may be interchanged (i.e. the devices described herein may be inverted without compromising their operation). As shown in the figure, each sensor comprises a working electrode 110 and counter/pseudo-reference electrode 120 for forming a two-electrode electrochemical cell. Counter electrode 120 is provided within a defined spatial region, and working electrode 110 is spatially distributed within the spatial region. Each electrochemical electrode has an electrical path extending therefrom, connecting the electrode to an externally addressable contact pad, electrode or electrical connector. The electrochemical electrodes may be positioned (e.g. spatially registered) such that when the two-plate device is assembled, the electrochemical electrodes are positioned above (i.e. opposite to) one or more actuation electrodes.

In the example embodiment shown in FIGS. 2A and 2B, the two-electrode electrochemical cell is formed from a thin working electrode surrounded by a proportionally larger counter/pseudo-reference electrode. Two-electrode cells are easier to fabricate and operate (relative to the more conventional three-electrode cells), but they can suffer from signal instability. To overcome this drawback, the area of the counter/pseudo-reference electrode may be designed to be larger than the working electrode, as described in detail below. According to several example embodiments, the working electrode is configured as a spatially distributed electrode that spatially extends into the spatial region otherwise occupied by the counter/pseudo-reference electrode. For example, in the present example embodiment, working electrode 110 is formed from a number of elongate segments that radiate in a radial configuration from a location near the center of the counter electrode. Such an embodiment increases the contact area between the working electrode and the working solution, making it suitable for sensitive analyses of trace analytes.

As described below, the sensor electrodes may be formed from the same planar electrode material that defines the secondary electrode of the digital microfluidic device. For example, the sensor electrodes may be etched on the top plate out of a continuous plate of ITO (using photolithography and wet etching), and separated from the much larger secondary electrode used to enable DMF droplet manipulation. In such an embodiment, the entire top plate may be coated with Teflon-AF, except for the sensor-electrodes, which are exposed, for example, by a lift-off process.

Various example embodiments provided herein overcome drawbacks associated with known implementations of electrochemical sensors in digital microfluidic devices. Prior implementations typically either (a) require complex multistep fabrication processes and are thus likely expensive to manufacture, or (b) simply use external electrodes with no integration, and are thus not suitable for mass production. Moreover, as demonstrated in the examples below, ratio of electrode areas according to various embodiments disclosed herein allow for low detection limits that are likely unmatched by any of the previously reported methods, except for methods relying on fragile nanostructured metal electrodes.

### Example Electrode Configurations

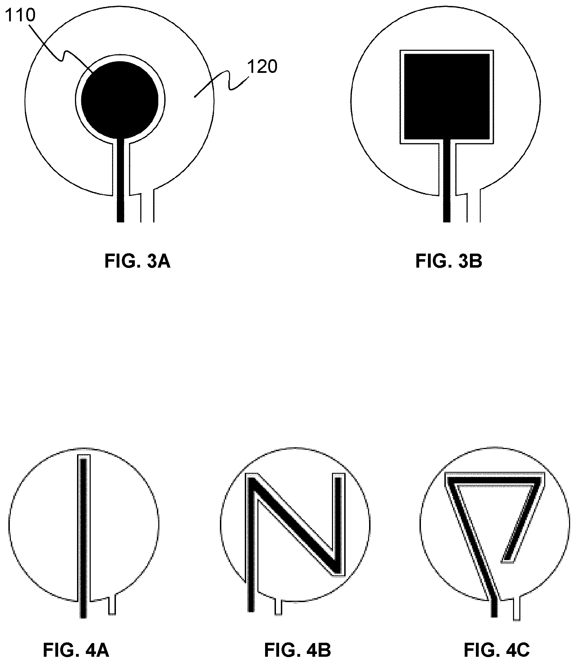

Referring to FIGS. 3A and 3B, examples of conventional two-electrode electrochemical sensors are shown, in which the working electrode is not spatially distributed within a spatial region associated with the counter electrode, and is not formed from elongate segments. Such electrode configurations result in the aforementioned performance limitations.

In contrast, various example embodiments of the present disclosure provide electrode configurations in which the working electrode is spatially distributed within a spatial region associated with the counter electrode. For example, FIGS. 4A-4C show various example two-electrode electrochemical sensor configurations in which the working electrode is provided as a single elongate segment that is spatially distributed within a spatial region associated with the counter electrode.

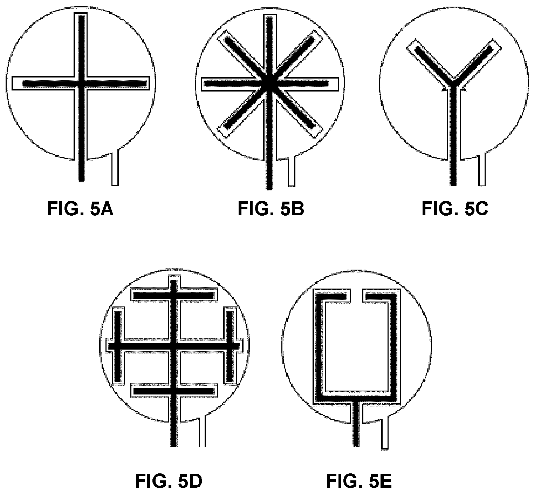

Another set of example electrode configurations are shown in FIGS. 5A-5E, which illustrate example two-electrode electrochemical sensor configurations in which the working electrode is provided in the form of a first elongate electrode segment that branches into two or more additional elongate electrode segments that are spatially distributed within a spatial region associated with the counter electrode.

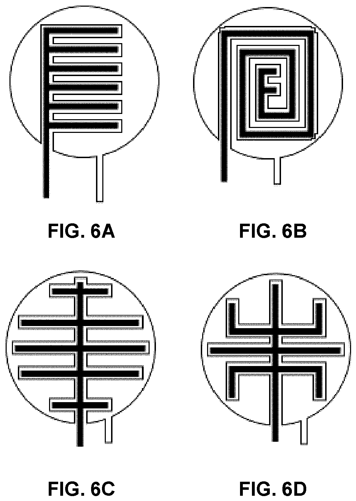

FIGS. 6A-6D show various example two-electrode electrochemical sensor configurations in which elongate segments of the working electrode are interdigitated with neighbouring elongate segments of the counter electrode. In some embodiments, as shown in FIG. 6B, the working electrode may be provided as an inwardly directed spiral. Another example geometrical configuration of the working electrode is a serpentine configuration.

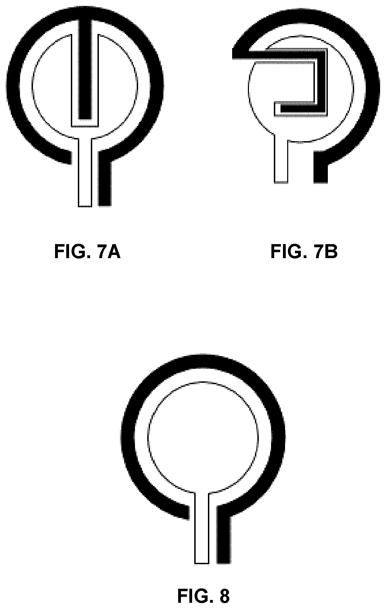

Referring now to FIGS. 7A and 7B, example two-electrode electrochemical sensor configurations are shown in which the working electrode is provided in the form of an elongate segment that surrounds at least a portion of a perimeter of said electrochemical counter electrode, and also extends within a spatial region associated with the counter electrode.

FIG. 8 shows an example two-electrode electrochemical sensor configuration in which the working electrode is provided in the form of an elongate segment that surrounds at least a portion of a perimeter of said electrochemical counter electrode.

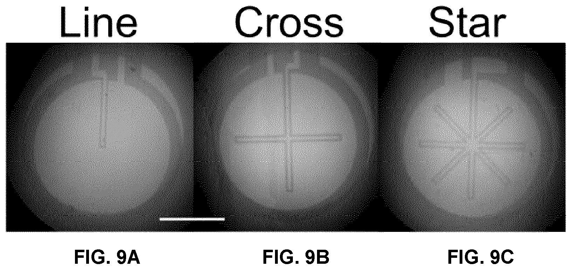

Examples of electrode configurations that have been fabricated and experimentally tested are shown in FIGS. 9A-9C. The images show three different two-electrode electrochemical sensors, in the form of a line, cross, and star, that were formed in the top plate of a digital microfluidic device by removal, through etching, of selected regions of an ITO layer.

Although the preceding examples show a counter electrode having a circular profile, it will be understood that the counter electrode can take on a wide variety of other shapes, such as square, elliptical, polygonal, and the like.

It is also noted that although the examples provided herein involve electrochemical sensors based on a two-electrode configuration, the embodiments provided herein may be adapted or modified to include one or more additional electrodes, such as an electrochemical reference electrode.

### Relative Area of Working Electrode and Counter Electrode

In a two-electrode electrochemical cell, the counter electrode also acts as the reference electrode, simplifying manufacturing and setup process. However, the lack of the third reference electrode removes the ability for it to maintain the accurate potential difference between the counter and working electrode. Therefore, a two-electrode cell with a conventional ratio of the area between the counter electrode and the reference electrode, namely A_{CE}/A_{WE} < 2 (e.g. as shown in FIGS. 3A and 3B), will have result in significant noise, as current passing through the system will cover the majority of the surface of the counter electrode, charging the electrode and changing the potential between the counter electrode and the working electrode, and creating a system with a unstable baseline. This biased counter electrode is the source of noise that creates the lower signal-to-noise ratio normally seen in conventional two-electrode electrochemical cells.

However, by increasing A_{CE}/A_{WE}, according to various embodiments of the present disclosure, one can obtain a larger surface area that can absorb larger amounts current. In some embodiments, the area ratio of the areas of the counter electrode and reference electrode are provide such that 5 < A_{CE}/A_{WE} < 15. Within this ratio range, there is sufficient surface area of the counter electrode that normal currents generated by the electrochemical cell are small enough such that they do not charge the counter electrode to a sufficient degree to bias the recording signal.

It is noted that an area ratio beyond this range may result in performance degradation for the following reasons: (i) at larger A_{CE}/A_{WE} ratios, too much of the droplet is not exposed to the working electrode, reducing efficiency of the electrochemical cell; and (ii) larger A_{CE}/A_{WE} ratios necessarily require more space on the system, reducing ability to form multiplexed arrays of electrodes and reducing throughput. Notwithstanding these potential problems, embodiments may be realized in which the area ratio exceeds 15, such as an area ratio that exceeds 20, 50, or 100.

### Thickness of Elongate Segments of Working Electrode

In some embodiments, the working electrode is provided as one or more elongate segments, as noted above. The width of the elongate segments may be selected, and/or optimized, based on analyte of interest and the desired concentration range. In the some example implementations, the width of at least a portion of one or more segments of the working electrode may be between approximately 1 and 10 microns, between approximately 10 and 100 microns, or between approximately 100 and 500 microns. A width in the range of 50-200 microns may be suitable for a wide range of analytes.

It is noted that at a width of approximately 1 micron, the working electrode is the most sensitive, as normal linear diffusion is replaced by radial diffusion, allowing the electrode to come into contact with a higher amount of analyte at a lower concentration. On the other hand, at 500 microns, the electrode is most suitable for analytes with low diffusivity or large sizes, these analytes need more time and space to diffuse onto the electrodes.

### Different Types of Electrochemical Electrode Materials

Although many of the examples provided herein employ ITO for forming the electrochemical electrodes, it will be understood that ITO is but one example of a suitable conductive material for forming one or both of the electrochemical electrodes. Examples of other conductive materials that may be employed for forming one or both of the electrochemical electrodes include, but are not limited to, gold, silver, carbon and platinum. For example, electrochemical electrodes may be formed as gold vs. gold, silver vs. silver, carbon vs. carbon, platinum vs. platinum, and combinations thereamong, such as gold vs. silver, gold vs. platinum, gold vs. carbon, and the like, as will be apparent to one skilled in the art of electrochemical detection.

In one example implementation, such electrodes may be formed on an underlying ITO layer. Example methods of fabricating such electrodes on ITO (with the exception of carbon) are provided in Shamsi, M.H.; Choi, K.; Ng, A.H.C.; Wheeler, A.R. "A digital microfluidic electrochemical immunoassay" Lab on a Chip 2014, 14, 547-554.

### Example System for Performing Electrochemical Measurements with a Digital Microfluidic Device

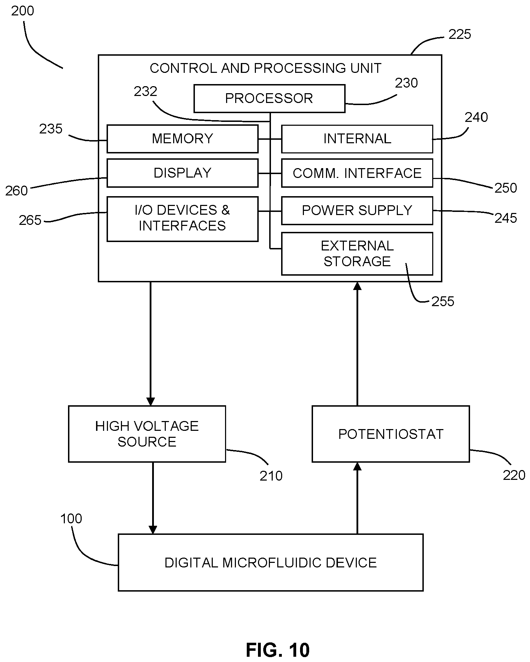

Referring now to FIG. 10, an illustration is provided of an example system 200 for controlling digital microfluidic droplet actuation and performing electrochemical measurements. As shown in FIG. 10, the digital microfluidic actuation electrodes, and the secondary electrode, are connected to, or connectable, to a high voltage power supply, which is controlled by a controlling and processing unit 225. The electrochemical sensing system is controlled by potentiostat 220, which is controlled and/or interrogated by control and processing unit 225. Although high voltage supply 210 and potentiostat 220 are shown as separate system components, it will be understood that two or more system components can be integrated into a single assembly.

FIG. 10 provides an example implementation of control and processing unit 225, which includes one or more processors 230 (for example, a CPU/microprocessor), bus 232, memory 235, which may include random access memory (RAM) and/or read only memory (ROM), one or more internal storage devices 240 (e.g. a hard disk drive, compact disk drive or internal flash memory), a power supply 245, one more communications interfaces 250, external storage 255, a display 260 and various input/output devices and/or interfaces 265 (e.g., a user input device, such as a keyboard, a keypad, a mouse, a position tracked stylus, a position tracked probe, a foot switch, and/or a microphone for capturing speech commands).

Although only one of each component is illustrated in FIG. 10, any number of each component can be included in the control and processing unit 225. For example, a computer typically contains a number of different data storage media. Furthermore, although bus 232 is depicted as a single connection between all of the components, it will be appreciated that the bus 232 may represent one or more circuits, devices or communication channels which link two or more of the components. For example, in personal computers, bus 232 often includes or is a motherboard.

In one embodiment, control and processing unit 225 may be, or include, a general purpose computer or any other hardware equivalents. Control and processing unit 225 may also be implemented as one or more physical devices that are coupled to processor 230 through one of more communications channels or interfaces. For example, control and processing unit 225 can be implemented using application specific integrated circuits (ASICs). Alternatively, control and processing unit 225 can be implemented as a combination of hardware and software, where the software is loaded into the processor from the memory or over a network connection.

Control and processing unit 225 may be programmed with a set of instructions which when executed in the processor causes the system to perform one or more methods described in the disclosure. Control and processing unit 225 may include many more or less components than those shown.

While some embodiments have been described in the context of fully functioning computers and computer systems, those skilled in the art will appreciate that various embodiments are capable of being distributed as a program product in a variety of forms and are capable of being applied regardless of the particular type of machine or computer readable media used to actually effect the distribution.

A computer readable medium can be used to store software and data which when executed by a data processing system causes the system to perform various methods. The executable software and data can be stored in various places including for example ROM, volatile RAM, non-volatile memory and/or cache. Portions of this software and/or data can be stored in any one of these storage devices. In general, a machine readable medium includes any mechanism that provides (i.e., stores and/or transmits) information in a form accessible by a machine (e.g., a computer, network device, personal digital assistant, manufacturing tool, any device with a set of one or more processors, etc.).

Examples of computer-readable media include but are not limited to recordable and non-recordable type media such as volatile and non-volatile memory devices, read only memory (ROM), random access memory (RAM), flash memory devices, floppy and other removable disks, magnetic disk storage media, optical storage media (e.g., compact discs (CDs),digital versatile disks (DVDs), etc.), among others. The instructions can be embodied in digital and analog communication links for electrical, optical, acoustical or other forms of propagated signals, such as carrier waves, infrared signals, digital signals, and the like.

Some aspects of the present disclosure can be embodied, at least in part, in software. That is, the techniques can be carried out in a computer system or other data processing system in response to its processor, such as a microprocessor, executing sequences of instructions contained in a memory, such as ROM, volatile RAM, non-volatile memory, cache, magnetic and optical disks, or a remote storage device. Further, the instructions can be downloaded into a computing device over a data network in a form of compiled and linked version. Alternatively, the logic to perform the processes as discussed above could be implemented in additional computer and/or machine readable media, such as discrete hardware components as large-scale integrated circuits (LSI's), application-specific integrated circuits (ASIC's), or firmware such as electrically erasable programmable read-only memory (EEPROM's) and field-programmable gate arrays (FPGAs).

Embodiments of the present disclosure may be employed for a variety of assays that employ electrochemical detection (particularly those that require sensitive analysis of trace amounts of analyte). One example application, which is illustrated in the examples provided below, involves the sensitive measurement of dopamine concentration using a two-electrode electrochemical sensor that is configured according to the example embodiments disclosed herein. It will be understood that the example application involving dopamine measurement is provided merely as an illustrative example application, and that many other applications may be realized by selecting different analytes (and optionally different electrode compositions).

### Alternative Single-Plate and Two-Plate Designs

Although the preceding example embodiments, and the examples provided herebelow, relate to two-plate designs with one or more electrochemical sensors integrated into the top plate of a two-plate device, it will be understood that various other alternative embodiments may be realized by additionally, or alternatively, incorporating one or more electrochemical sensors into the bottom plate of a two-plate device, or into a single-plate device. For example, the bottom plate of a two-plate device, or a single plate of an open digital microfluidic device, may be adapted to include one or more electrochemical sensors incorporating a working electrode and a counter electrode based on the embodiments described herein.

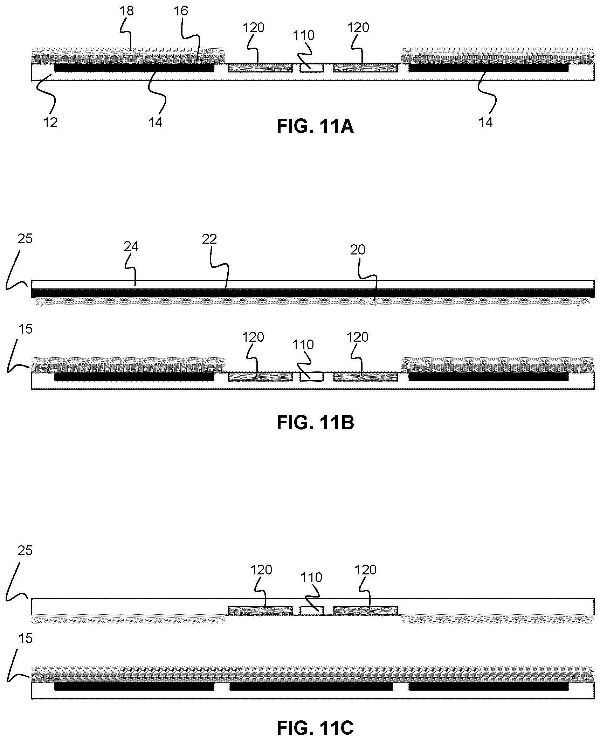

In a single-plate device, the electrochemical electrodes may be formed on the bottom plate, in addition to both the actuation electrodes and the secondary digital microfluidic electrodes. For example, electrochemical electrodes may be provided within a region of a single plate that would otherwise have been occupied by a portion of an actuation electrode. FIG. 11A shows a cross-sectional view of example single-plate embodiment, where the single plate includes the insulating substrate 12, digital microfluidic actuation electrodes 14, one or more secondary digital microfluidic electrodes (not shown), a dielectric layer 16, and a hydrophobic layer 18. The electrochemical working electrode 110 and the counter/pseudo-reference electrode 120 (shown surrounding the working electrode 110 in the present example embodiment) are shown residing on the insulating substrate 12.

In another example implementation, in a two-plate device, electrochemical electrodes can be formed on the bottom plate, coplanar to the actuation electrodes, or in a different plane on the bottom plate, provided that the electrochemical electrodes are in electrical communication with droplets translated on the working surface of the device (e.g. exposed electrodes). For example, FIG. 11B illustrates an example two-plate embodiment in which the bottom plate 15 of a two-plate device includes the electrochemical electrodes, and where the top plate 25 includes the top insulating substrate 24, one or more secondary digital microfluidic electrodes 22 (the example embodiment shown includes a single secondary electrode), and a hydrophobic layer 20.

FIG. 11C illustrates another alternative example two-plate embodiment in which the electrochemical electrodes 110 and 120 are provided in the top plate 25, and where one or more secondary digital microfluidic electrodes (not shown) are provided in the bottom plate 15.

The following examples are presented to enable those skilled in the art to understand and to practice embodiments of the present disclosure. They should not be considered as a limitation on the scope of the disclosure, but merely as being illustrative and representative thereof.

### EXAMPLES

### Example 1: Electrochemical Measurement of Dopamine Concentration

A digital microfluidic device with an integrated electrochemical sensor was formed as described below. The electrodes were characterized by cyclic voltammetry of 2 mM ferro/ferricyanide. FIG. 12A plots a comparison of peak current strength compared to total surface area of the working electrode. Note that peak signal current increases -linearly with electrode surface area. Representative cyclic voltammograms (CV) are shown in 12B for 2mM ferri-ferrocyanide in PBS buffer for sensors with line, cross and star shaped working electrodes.

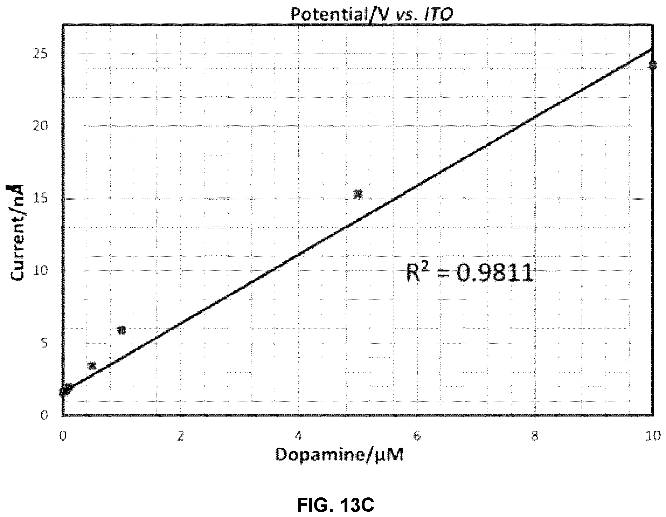

An on-chip serial dilution was then conducted to determine the sensitivity of the system to dopamine, with a limit of detection of 20.3 nM, well below the level expected from physiological dopamine spikes. Results from on-chip analysis of dopamine, using two-electrode electrochemical cells formed as described below, are shown in FIGS. 13A-13C. FIG. 13A shows background subtracted cyclic voltammograms of dopamine (DA) at 10 µM. The black arrow signifies the potential chosen for comparing peak potentials (0.788V). The inset shows the raw signal and background. FIG. 13B shows a series of non-background-subtracted cyclic voltammograms of 0, 0.5, 1, 5, and 10 µM DA. FIG. 13C shows a calibration curve (black) of dopamine from 0 nM to 10 µM. Error bars represent ± one standard deviation and are smaller than the markers. The limit of detection is 40 nM, defined as the concentration corresponding to three times the standard deviation of blank measurements. The use of an all-ITO electroanalytical cell positioned on the top plate makes integration with DMF and microscopy particularly straightforward.

### Example 2: Fabrication of Bottom Plate of Digital Microfluidic Device

The patterns were generated by using transparent photomasks printed at 787 dot/mm (20,000 DPI). The bottom-plates of DMF devices bearing an array of electrodes were formed by standard photolithography and wet etching. Briefly, chromium- (200 nm thick) and photoresist-coated glass substrates 50.8 mm × 76.2 mm × 1.1 mm (2" × 3" ×1.1 mm) were exposed to UV light through a photomask using a Suss MicroTec mask aligner (29.8 mW/cm², 10 seconds). The exposed substrates were developed in MF-321 (3 min) and post-baked on a hot plate (125 °C, 1 min). The developed substrates were etched in CR-4 (3 min) and the remaining photoresist was stripped in AZ300T (5 min).

After forming electrodes, the substrates were primed for parylene coating by immersing in silane solution (2-propanol, DI water, A-174, and acetic acid 50:50:1:2 v/v/v/v, 10 min) and curing on a hot-plate (80 °C, 10 min). After rinsing and drying, devices were coated with ∼7 µm of Parylene C (vapor deposition) and ∼200 nm of Teflon-AF (spin-coating, 1% w/w in Fluorinert FC-40, 2000 rpm, 60 s), and post-baked on a hot-plate (165 °C, 10 min). The polymer coatings were removed from contact pads by gentle scraping with a scalpel.

### Example 3: Fabrication of Top Plate of Digital Microfluidic Device

Top-plates of DMF devices were formed from indium-tin oxide (ITO) coated glass substrates in three stages.

In the first stage, the substrates were sonicated in acetone for 5 min and rinsed in 2-propanol for 1 min. After drying and dehydrating, substrates were spin-coated (3000 RPM, 45 s) with Shipley S1811 photoresist (Marlborough, MA) and then post-baked on a hot plate (95 °C, 2 min). Subsequently, the substrates were exposed (29.8 mW cm⁻², 10 s) through a mask. The substrates were developed for 3 min by immersing in MF-321 (MicroChem, Newton, Massachusetts), post-baked on a hot plate (125 °C, 1 min), and then etched for 10 min by immersing in ITO etchant comprising 4 : 2 : 1 (v/v/v) hydrochloric acid, deionized (DI) water, and nitric acid. After rinsing, the remaining photoresist was stripped for 5 min by immersing in AZ300T (Capitol Scientific Inc., Texas). When complete, the ITO on the device was separated into seven isolated regions, including six electroanalysis electrodes (four 1.6 mm diameter circles and two 1.2 × 1.2 mm squares) and one large, irregularly shaped DMF driving electrode. Each electroanalysis electrode was connected to a contact pad on the edge of the substrate.

In the second stage, a spin-coat/lift-off process was performed, as described here in detail. ITO-glass slides were immersed in RCA solution (6 : 1 : 1 DI water: 28% aqueous ammonium hydroxide: 30% hydrogen peroxide) for 15 min at 80 °C. After rinsing, drying, and dehydrating, substrates were spin-coated with Shipley S1811 photoresist (3000 RPM, 60 s) and then post-baked on a hot plate (2 min, 95 °C). The substrates were exposed (10 s, 29.8 mW cm⁻²) through a mask bearing features of the two electrochemical electrodes and then developed in MF-321.

After rinsing and drying, the substrates were flood exposed (10 s, 29.8 mW cm⁻²), and then spin-coated with Teflon-AF and post-baked using the same parameters used for bottom-plate substrates (as above). The substrates were then immersed in acetone with gentle agitation until the Teflon-AF over the patterned sites was lifted off (5-10 s). After rinsing and drying, the Teflon-AF was reflowed by baking on a hot plate at 165 °C and 230 °C for 5 min at each temperature.

The specific embodiments described above have been shown by way of example, and it should be understood that these embodiments may be susceptible to various modifications and alternative forms. It should be further understood that the invention is defined by the appended claims.

## Claims

1. A digital microfluidic device comprising:
a first plate (15) comprising:
a first insulating substrate (12);
an array of digital microfluidic actuation electrodes (14) provided on the first insulating substrate;
a first dielectric layer (16) formed over said array of digital microfluidic actuation electrodes; and
a first hydrophobic layer (18) provided on said first dielectric layer, said first hydrophobic layer providing a first hydrophobic working surface;
a second plate (25) comprising:
a second insulating substrate (24) having at least a second hydrophobic layer (20) provided thereon, said second hydrophobic layer providing a second hydrophobic working surface;
wherein said first plate and said second plate are provided in a spaced relationship defining a gap (30) therebetween to permit droplet motion under actuation of said actuation electrodes;
wherein one of said first insulating substrate and said second insulating substrate has one or more digital microfluidic secondary electrodes (22) provided thereon, and wherein said one or more digital microfluidic secondary electrodes are provided such that liquid droplets are transportable under application of voltages between said array of digital microfluidic actuation electrodes and said one or more digital microfluidic secondary electrodes; and
**characterized in that**
one of said first insulating substrate and said second insulating substrate comprises a two-electrode electrochemical sensor having an electrochemical working electrode (110) and an electrochemical counter/pseudo-reference electrode (120) for forming an electrochemical cell, the electrochemical working electrode provided in the form of a first elongate electrode segment that branches into two or more additional elongate electrode segments that are spatially distributed within a spatial region associated with the electrochemical counter/pseudo-reference electrode;
wherein said electrochemical working electrode and said electrochemical counter/pseudo-reference electrode are exposed to the gap between said first plate and said second plate such that a droplet positioned between said first plate and said second plate at a location corresponding to said electrochemical working electrode and said electrochemical counter/pseudo-reference electrode is in electrical communication with said electrochemical working electrode and said electrochemical counter/pseudo-reference electrode; and
wherein an area of said electrochemical counter/pseudo-reference electrode exceeds an area of said electrochemical working electrode by a factor of at least 5.

2. The digital microfluidic device according to claim 1 wherein the factor by which the area of said electrochemical counter/pseudo-reference electrode exceeds the area of said electrochemical working electrode is less than 15.

3. The digital microfluidic device according to claim 1 wherein at least a portion of the two or more additional elongate electrode segments has a width between 1 micron and 10 microns.

4. The digital microfluidic device according to claim 1 wherein at least a portion of the two or more additional elongate electrode segments has a width between 10 micron and 100 microns.

5. The digital microfluidic device according to claim 1 wherein at least a portion of the two or more additional elongate electrode segments has a width between 100 microns and 500 microns.

6. The digital microfluidic device according to any one of claims 3 to 5 wherein at least a portion of the two or more additional elongate electrode segments of said electrochemical working electrode is interdigitated with neighbouring elongate segments of said electrochemical counter/pseudo-reference electrode.

7. The digital microfluidic device according to any one of claims 3 to 5 wherein at least a portion of the two or more additional elongate electrode segments is configured as an inwardly directed spiral.

8. The digital microfluidic device according to any one of claims 3 to 5 wherein at least a portion of the two or more additional elongate electrode segments is configured to exhibit a serpentine profile.

9. The digital microfluidic device according to any one of claims 3 to 5 wherein said first elongate electrode segment terminates proximal to a central region of said electrochemical counter/pseudo-reference electrode, and the two or more additional elongate electrode segments extend radially from said first elongate segment.

10. The digital microfluidic device according to any one of claims 1 to 9 wherein one or both of said electrochemical counter/pseudo-reference electrode and said electrochemical working electrode are formed from the same conductive material as the digital microfluidic secondary electrode.

11. The digital microfluidic device according to claim 10 wherein the conductive material is indium tin oxide.

12. The digital microfluidic device according to claim 10 wherein said electrochemical working electrode and said electrochemical counter/pseudo-reference electrode are formed on said second insulating substrate.

## Patentansprüche

1. Digitale mikrofluidische Vorrichtung, umfassend: eine erste Platte (15), umfassend:
ein erstes isolierendes Substrat (12);
eine Anordnung von digitalen mikrofluidischen Betätigungselektroden (14), die auf dem ersten isolierenden Substrat bereitgestellt sind;
eine erste dielektrische Schicht (16), die über der Anordnung von digitalen mikrofluidischen Betätigungselektroden gebildet ist; und
eine erste hydrophobe Schicht (18), die auf der ersten dielektrischen Schicht bereitgestellt ist, wobei die erste hydrophobe Schicht eine erste hydrophobe Arbeitsfläche bereitstellt;
eine zweite Platte (25), umfassend:
ein zweites isolierendes Substrat (24) mit mindestens einer zweiten hydrophoben Schicht (20), die darauf bereitgestellt ist, wobei die zweite hydrophobe Schicht eine zweite hydrophobe Arbeitsfläche bereitstellt;
wobei die erste Platte und die zweite Platte in einer beabstandeten Beziehung vorgesehen sind, die einen Spalt (30) dazwischen definiert, um eine Tropfenbewegung unter Betätigung der Betätigungselektroden zu ermöglichen;
wobei eines von dem ersten isolierenden Substrat und dem zweiten isolierenden Substrat eine oder mehrere digitale mikrofluidische Sekundärelektroden (22) aufweist, die darauf bereitgestellt sind, und wobei die eine oder die mehreren digitalen mikrofluidischen Sekundärelektroden bereitgestellt sind, sodass Flüssigkeitströpfchen unter Anlegen von Spannungen zwischen der Anordnung von digitalen mikrofluidischen Betätigungselektroden und der einen oder mehreren digitalen mikrofluidischen Sekundärelektroden transportierbar sind; und
**dadurch gekennzeichnet, dass**
eines von dem ersten isolierenden Substrat und dem zweiten isolierenden Substrat einen elektrochemischen Zwei-Elektroden-Sensor mit einer elektrochemischen Arbeitselektrode (110) und einer elektrochemischen Gegen-/Pseudoreferenzelektrode (120) zum Bilden einer elektrochemischen Zelle umfasst, wobei die elektrochemische Arbeitselektrode in Form eines ersten länglichen Elektrodensegments bereitgestellt ist, das in zwei oder mehrere zusätzliche längliche Elektrodensegmente verzweigt, die räumlich innerhalb einer räumlichen Region verteilt sind, die mit der elektrochemischen Gegen-/Pseudoreferenzelektrode assoziiert ist;
wobei die elektrochemische Arbeitselektrode und die elektrochemische Gegen-/Pseudoreferenzelektrode an den Spalt zwischen der ersten Platte und der zweiten Platte ausgesetzt sind, sodass ein Tröpfchen, das zwischen der ersten Platte und der zweiten Platte an einer der elektrochemischen Arbeitselektrode und der elektrochemischen Gegen-/Pseudoreferenzelektrode entsprechenden Stelle positioniert ist, in elektrischer Verbindung mit der elektrochemischen Arbeitselektrode und der elektrochemischen Gegen-/Pseudoreferenzelektrode ist; und
wobei eine Fläche der elektrochemischen Gegen-/Pseudoreferenzelektrode eine Fläche der elektrochemischen Arbeitselektrode um einen Faktor von mindestens 5 übersteigt.

2. Digitale mikrofluidische Vorrichtung nach Anspruch 1, wobei der Faktor, um den die Fläche der elektrochemischen Gegen-/Pseudoreferenzelektrode die Fläche der elektrochemischen Arbeitselektrode überschreitet, weniger als 15 ist.

3. Digitale mikrofluidische Vorrichtung nach Anspruch 1, wobei mindestens ein Teil der zwei oder mehreren zusätzlichen länglichen Elektrodensegmente eine Breite zwischen 1 Mikrometer und 10 Mikrometer aufweist.

4. Digitale mikrofluidische Vorrichtung nach Anspruch 1, wobei mindestens ein Teil der zwei oder mehreren zusätzlichen länglichen Elektrodensegmente eine Breite zwischen 10 Mikrometer und 100 Mikrometer aufweist.

5. Digitale mikrofluidische Vorrichtung nach Anspruch 1, wobei mindestens ein Teil der zwei oder mehreren zusätzlichen länglichen Elektrodensegmente eine Breite zwischen 100 Mikrometer und 500 Mikrometer aufweist.

6. Digitale mikrofluidische Vorrichtung nach einem der Ansprüche 3 bis 5, wobei mindestens ein Teil der zwei oder mehreren zusätzlichen länglichen Elektrodensegmente der elektrochemischen Arbeitselektrode mit benachbarten länglichen Segmenten der elektrochemischen Gegen-/Pseudoreferenzelektrode interdigitalisiert ist.

7. Digitale mikrofluidische Vorrichtung nach einem der Ansprüche 3 bis 5, wobei mindestens ein Teil der zwei oder mehreren zusätzlichen länglichen Elektrodensegmente als eine einwärts gerichtete Spirale konfiguriert ist.

8. Digitale mikrofluidische Vorrichtung nach einem der Ansprüche 3 bis 5, wobei mindestens ein Teil der zwei oder mehreren zusätzlichen länglichen Elektrodensegmente konfiguriert ist, um ein Serpentinenprofil aufzuweisen.

9. Digitale mikrofluidische Vorrichtung nach einem der Ansprüche 3 bis 5, wobei das erste längliche Elektrodensegment proximal zu einem zentralen Bereich der elektrochemischen Gegen-/Pseudoreferenzelektrode endet und sich die zwei oder mehreren zusätzlichen länglichen Elektrodensegmente radial von dem ersten länglichen Segment erstrecken.

10. Digitale mikrofluidische Vorrichtung nach einem der Ansprüche 1 bis 9, wobei eine oder beide der elektrochemischen Gegen-/Pseudoreferenzelektrode und der elektrochemischen Arbeitselektrode aus dem gleichen leitenden Material wie die digitale mikrofluidische Sekundärelektrode gebildet sind.

11. Digitale mikrofluidische Vorrichtung nach Anspruch 10, wobei das leitende Material Indiumzinnoxid ist.

12. Digitale mikrofluidische Vorrichtung nach Anspruch 10, wobei die elektrochemische Arbeitselektrode und die elektrochemische Gegen-/Pseudoreferenzelektrode auf dem zweiten isolierenden Substrat gebildet sind.

## Revendications

1. Dispositif microfluidique numérique comprenant : une première plaque (15) comprenant :
un premier substrat isolant (12) ;
un réseau d'électrodes d'actionnement microfluidiques numériques (14) prévues sur le premier substrat isolant ;
une première couche diélectrique (16) formée par-dessus ledit réseau d'électrodes d'actionnement microfluidiques numériques ; et
une première couche hydrophobe (18) prévue sur ladite première couche diélectrique, ladite première couche hydrophobe formant une première surface de travail hydrophobe ;
une deuxième plaque (25) comprenant :
une deuxième substrat isolant (24) sur lequel est prévue au moins une deuxième couche hydrophobe (20), ladite deuxième couche hydrophobe formant une deuxième surface de travail hydrophobe ;
ladite première plaque et ladite deuxième plaque étant prévues dans une relation espacées définissant un espace (30) entre elles pour permettre un déplacement de gouttelettes sous l'actionnement desdites électrodes d'actionnement ;
l'un dudit premier substrat isolante et dudit deuxième substrat isolant ayant au moins une électrode secondaire microfluidique numérique (22) prévue sur celui-ci, et ladite au moins une électrode secondaire microfluidique numérique étant prévue de sorte que des gouttelettes de liquide puissent être transportées sous l'application de tensions entre ledit réseau d'électrodes d'actionnement microfluidiques numériques et ladite au moins une électrode secondaire microfluidique numérique ; et
**caractérisé en ce que**
l'un dudit premier substrat isolant et dudit deuxième substrat isolant comprend un capteur électrochimique à deux électrodes ayant une électrode de travail électrochimique (110) et une contre-électrode/électrode de pseudo-référence électrochimique (120) destinées à former une pile électrochimique, l'électrode de travail électrochimique étant prévue sous la forme d'un premier segment d'électrode allongé qui se ramifie en au moins deux segments d'électrode allongés supplémentaires qui sont spatialement répartis dans une région spatiale associée à la contre-électrode/électrode de pseudo-référence électrochimique ;
ladite électrode de travail électrochimique et ladite contre-électrode/électrode de pseudo-référence électrochimique étant exposées entre ladite première plaque et ladite deuxième plaque de sorte qu'une gouttelette positionnée entre ladite première plaque et ladite deuxième plaque à un emplacement correspondant à ladite électrode de travail électrochimique et à ladite contre-électrode/électrode de pseudo-référence électrochimique soit en communication électrique avec ladite électrode de travail électrochimique et ladite contre-électrode/électrode de pseudo-référence électrochimique ; et
une aire de ladite contre-électrode/électrode de pseudo-référence électrochimique dépassant une aire de ladite électrode de travail électrochimique par un facteur d'au moins 5.

2. Dispositif microfluidique numérique selon la revendication 1, dans lequel le facteur par lequel l'aire de ladite contre-électrode/électrode de pseudo-référence électrochimique dépasse l'aire de ladite électrode de travail électrochimique est inférieur à 15.

3. Dispositif micro fluidique numérique selon la revendication 1, dans lequel au moins une partie des au moins deux segments d'électrode allongés supplémentaires présente une largeur comprise entre 1 micron et 10 microns.

4. Dispositif micro fluidique numérique selon la revendication 1, dans lequel au moins une partie des au moins deux segments d'électrode allongés supplémentaires présente une largeur comprise entre 10 microns et 100 microns.

5. Dispositif micro fluidique numérique selon la revendication 1, dans lequel au moins une partie des au moins deux segments d'électrode allongés supplémentaires présente une largeur comprise entre 100 micron et 500 microns.

6. Dispositif micro fluidique numérique selon l'une quelconque des revendications 3 à 5, dans lequel au moins une partie des au moins deux segments d'électrode allongés supplémentaires de ladite électrode de travail électrochimique est entrecroisée avec des segments d'électrodes voisins de ladite contre-électrode/électrode de pseudo-référence.

7. Dispositif micro fluidique numérique selon l'une quelconque des revendications 3 à 5, dans lequel au moins une partie des au moins deux segments d'électrode allongés supplémentaires est conçue sous la forme d'une spirale dirigée vers l'intérieur.

8. Dispositif micro fluidique numérique selon l'une quelconque des revendications 3 à 5, dans lequel au moins une partie des au moins deux segments d'électrode allongés supplémentaires est conçue pour présenter un profil en serpentin.

9. Dispositif micro fluidique numérique selon l'une quelconque des revendications 3 à 5, dans lequel ledit premier segment d'électrode allongé se termine à proximité d'une région centrale de ladite contre-électrode/électrode de pseudo-référence électrochimique, et les au moins deux segments d'électrode allongés supplémentaires s'étendent radialement depuis le premier segment allongé.

10. Dispositif micro fluidique numérique selon l'une quelconque des revendications 1 à 9, dans lequel l'une ou les deux de ladite contre-électrode/électrode de pseudo-référence électrochimique et de l'électrode de travail électrochimique sont formées à partir du même matériau conducteur que l'électrode secondaire microfluidique numérique.

11. Dispositif microfluidique numérique selon la revendication 10, dans lequel le matériau conducteur est l'oxyde d'indium-étain.

12. Dispositif microfluidique numérique selon la revendication 10, dans lequel ladite électrode de travail électrochimique et ladite contre-électrode/électrode de pseudo-référence sont formées sur ledit deuxième substrat isolant.
